# EUROPEAN PATENT SPECIFICATION

(11) **EP 1 538 368 B1**
(45) Date of publication and mention of the grant of the patent: **12.03.2008**
(21) Application number: 03425776.6
(22) Date of filing: 02.12.2003
(51) Int. Cl.: F16H 7/08, F16H 19/00

(54) **Toothed rack for hydraulic chain tensioner**
Zahnstange für einen hydraulichen Kettenspanner
Crémaillère pour un dispositif tendeur hydraulique pour chaînes

(43) Date of publication of application: 08.06.2005
(73) Proprietor: Morse Tec Europe S.r.l., 20043 Arcore (Milano) (IT)
(72) Inventor: Clayton, Philippe Alain, Rickmansworth, Herts WD3 7HL (GB)
(74) Representative: Coggi, Giorgio

(56) References cited:
- EP-A- 1 249 641
- GB-A- 1 566 288
- GB-A- 2 340 200
- US-A- 5 946 973

## Description

The present invention refers to a toothed rack belonging to a device for tensioning drive transmission means, such as chains.

Reference will be made in particular to a toothed rack suitable to equip a hydraulic tensioner for chains, that is a device for tensioning drive transmission means, in particular chain transmission means for motor vehicles.

A timing system of an internal combustion engine can be controlled by means of a chain transmission, in which the chain is wound on two or more sprocket wheels, one of which is a drive wheel and takes its drive (even indirectly) from the drive shaft to transmit it to one or more shafts.

Since for reasons of adjustment, of wear on the materials and/or of take-up of slack it is often necessary to compensate for a certain loose on the chain, use is known of shoe tensioning devices, in which a shoe is pressed with an adjustable force against a branch of the chain.

Various means of pressing the tensioning shoe against the chain are known to the art.

The most frequently used means are hydraulic tensioners in which a fixed member (generally a cylinder) is mounted on the engine block and a movable member (generally a piston, movable inside the cylinder) is slidable with respect to the fixed member and acts against the shoe placed in contact with the chain to tension it.

In these tensioning devices the piston is pushed out of the cylinder, towards the shoe disposed against one branch of the chain, by the combined action of a spring and of a pressurized fluid (generally oil) introduced into the cylinder chamber though a check valve.

Any slackening of the chain due to heating, to wear and to time is compensated for by projection of the piston from the cylinder under the action of said pushing means.

When no pressurized fluid to be introduced into the cylinder chamber is available (for example because the engine has stopped or has only just been started up), the piston - subjected to the tension of the chain - can (or could) return partially into the cylinder, allowing the chain to slacken and thus not to transmit the drive correctly from the drive wheel to the driven wheels, compromising the efficiency and reliability of the timing system and putting (or being able to put) the engine "out of phase": to overcome this drawback, a known arrangement - for example from EP-A-1.188.955 in the name of the applicant - is to couple to the piston a toothed rack which, by interacting with a pawl coupled to the piston, prevents the piston from returning into the cylinder when no pressurized fluid is available.

Both the pawls and the toothed racks have a series of teeth able to engage with those of a toothed rack and a pawl, respectively, to hold the piston in position: at least the teeth of known toothed racks have the drawback that the area of joining of the walls of the two adjacent teeth has a "sharp edge" and is - or can be - the seat of cracks because the stresses to which said teeth are subjected are concentrated in this area.

The (possible) formation of cracks undermines the reliability of the toothed rack.

The closest prior art GB 2340200A discloses a backlashless ratchet-type tensioner, comprising a ratchet pivotally connected to a side of the cylinder, urged by a spring and provided with teeth meshing with a toothed rack formed on an outer surface of the piston.

Said toothed rack comprises a plurality of teeth wherein, at the area of joining of the walls of two adjacent teeth, a space having a large radius of curvature is provided.

The object of the present invention is to provide a toothed rack able to overcome the above drawbacks and is achieved according to the invention by providing a toothed rack, which presents the characteristics of appended independent claim 1; preferred embodiments of the invention are apparent from the dependent claims.

Substantially, according to the invention, the toothed rack has, at the area of joining of the walls of two adjacent teeth, a space (also known as a "relief") having a large radius of curvature which prevents the stresses to which the above teeth are subjected from concentrating in said area, thus preventing the (possible) formation of cracks.

A hydraulic tensioner comprising a toothed rack according to the present invention also forms the subject matter of the present invention.

Further characteristics of the invention will be made clearer by the detailed description that follows, referring to purely exemplary and therefore non-limiting embodiments thereof, illustrated in the appended drawings, in which:
- Figure 1 is a diagrammatic sectional view of a hydraulic tensioner of the prior art comprising a toothed rack;
- Figure 2 is an enlarged diagrammatic view of the detail denoted by P in Figure 1, belonging to a toothed rack of the prior art;
- Figure 3 is an enlarged diagrammatic view of the detail denoted by P in Figure 1, belonging to a toothed rack made according to the invention.

In the appended figures, corresponding elements are identified by means of the same reference numerals.

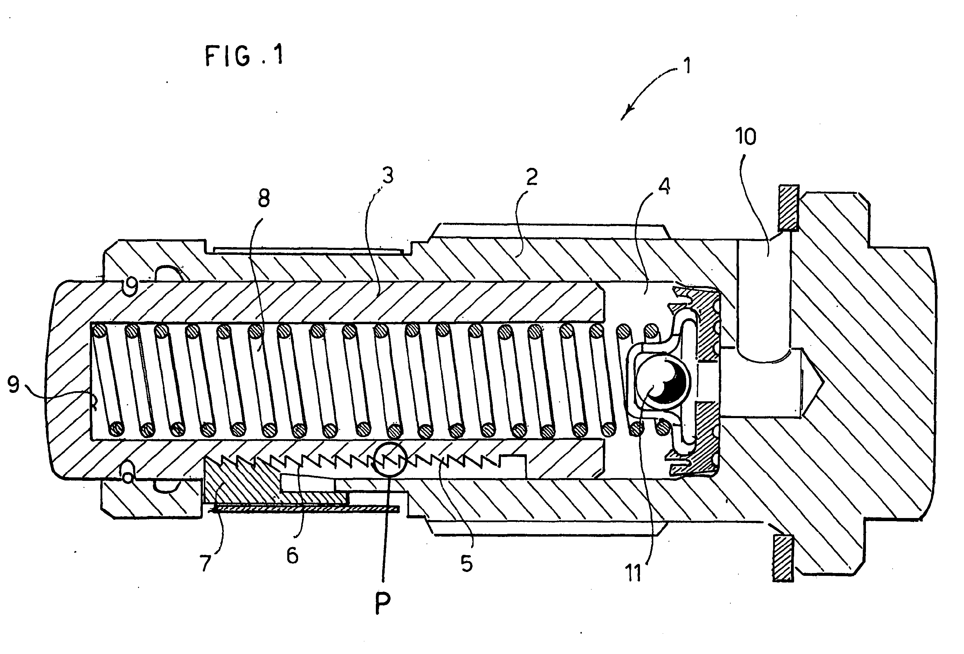

Figure 1 illustrates diagrammatically, in section, a hydraulic tensioner 1 of the prior art, which comprises a cylinder 2 and a piston 3 housed slidingly in a cylindrical chamber 4 of the cylinder 2; the piston 3 carries the toothed rack 5 (comprising a plurality of teeth 6) which interacts with the pawl 7 carried by the cylinder 2.

The piston 3 is hollow on the inside and houses a thrust spring 8 interacting between the end of the head 9 of the piston 3 and the bottom of the cylindrical chamber 4, which is in communication with a circuit for feeding the pressurized fluid (generally oil) through an aperture 10 and a check valve 11, not described in that it is per se known and in any case outside the present invention.

The combined action of the spring 8 and of the pressurized fluid in the chamber 4 tends to push the piston 3 out of the cylinder 2, so that the piston 3 comes to act with its head end 9 against a shoe (omitted in figure 1 for the sake of simplicity of the graphic representation) in order to keep the chain tensioned.

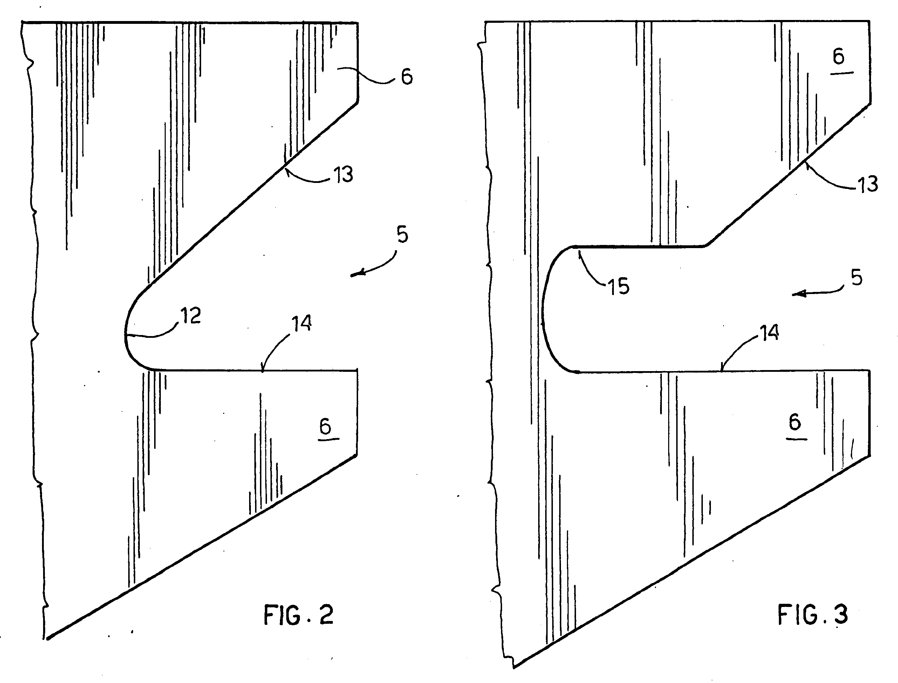

Figure 2 illustrates diagrammatically, enlarged, the detail denoted by P in Figure 1, belonging to a toothed rack 5 of the prior art, which has an area of joining 12 of the walls (13, 14) of two adjacent teeth 6 which is a "sharp edge" area and, in any case, which has a very small radius of curvature, typically between about 0.05 and 0.10 mm..

Figure 3 illustrates diagrammatically, enlarged, the detail denoted by P in Figure 1, belonging to a toothed rack 5 made according to the invention, which differs from that shown in Figure 2 in that it presents, at the area of joining 12 of the walls (13, 14) of two adjacent teeth 6, a space 15 (defined by the inclined wall 13 followed by a wall perpendicular to the linear direction of the rack 5, by the wall 14 parallel to said perpendicular wall and by a curved portion jointing said parallel walls) having a large radius of curvature, preferably about 0.3 mm and in any case between about 0.1 and 0.5 mm.

Furthermore, said radius of curvature of said curved portion is about 3 to 6 times the radius of curvature of the area of joining 12 of the walls (13, 14) of two adjacent teeth of a toothed rack 5 of the prior art and is comprised between about 1 time and about 10 times said radius of curvature.

A hydraulic tensioner 1 comprising a toothed rack 5 according to the present invention, which makes it possible to reach fully the established objects, also forms the subject matter of the present invention.

Without departing from the scope of the invention, a person skilled in the art can make all the modifications and improvements to the toothed rack of the present invention suggested by his experience and by the natural evolution of the art.

## Claims

1. A toothed rack (5) for a hydraulic chain tensioner (1), said rack (5) comprising a plurality of teeth (6) arranged in a linear direction along said rack (5), and each having a tooth crest and a tooth foot region,
- whereby a space (15) is provided between adjacent teeth (6),
- whereby one tooth (6) of said adjacent teeth (6) has an inclined linear wall (13) with respect to the linear direction of said rack (5) and starting from its tooth crest, followed by a wall perpendicular to the linear direction of said rack (5),
- whereby the other tooth (6) of said adjacent teeth (6) has a wall (14) parallel to said perpendicular wall of said one tooth (6) and starting on its tooth crest,
- whereby a curved portion, which has a large radius of curvature, joints said parallel walls of said adjacent teeth (6),
- whereby said inclined linear wall (13) and perpendicular wall of said one tooth, said curved portion and said perpendicular wall (14) of said other tooth (6) define said space (15).

2. A toothed rack (5) as in claim 1, **characterised in that** the radius of curvature of the curved portion of the space (15) is comprised between 0.10 and 0.50 mm.

3. A toothed rack (5) as in claim 2, **characterised in that** the radius of curvature of the curved portion of the space (15) is 0.30 mm.

4. A toothed rack (5) as in claim 1, **characterised in that** the radius of curvature of the curved portion of the space (15) is comprised between and 10 times the radius of curvature of the area of joining (12) of the walls (13, 14) of two adjacent teeth (6) of a known toothed rack, said radius of curvature of the above area of joining (12) being between 0.05 and 0.10 mm.

5. A toothed rack as in claim 4, **characterised in that** the radius of curvature of the curved portion of the space (15) is comprised between 3 and 6 times the radius of curvature of the above area of joining (12).

## Patentansprüche

1. Zahnstange (5) für einen hydraulischen Kettenspanner (1), wobei die Stange (5) mehrere, in einer linearen Richtung entlang der Stange (5) vorgesehene Zähne (6) umfasst und jeder Zahn einen Zahnkopf- und einen Zahnfußbereich hat,
wobei ein Raum (15) zwischen angrenzenden Zähnen (6) vorgesehen ist,
wobei ein Zahn (6) der angrenzenden Zähne (6) eine im Verhältnis zur linearen Richtung der Stange (5) geneigte lineare Wand (13) hat, die an seinem Zahnkopf beginnt und an die sich eine Wand senkrecht zur linearen Stange (5) anschließt,
wobei der andere Zahn (6) der angrenzenden Zähne (6) eine parallel zur senkrechten Wand des einen Zahns (6) verlaufende Wand (14) hat, die an seinem Zahnkopf beginnt,
wobei ein gekrümmter Abschnitt, der einen großen Krümmungsradius hat, die parallelen Wände der angrenzenden Zähne (6) miteinander verbindet, und
wobei die geneigte lineare Wand (13) und die senkrechte Wand des einen Zahns sowie der gekrümmte Abschnitt und die senkrechte Wand (14) des anderen Zahns (6) den Raum (15) definieren.

2. Zahnstange (5) nach Anspruch 1, **dadurch gekennzeichnet, dass** der Krümmungsradius des gekrümmten Abschnitts des Raums (15) 0,10 bis 0,50 mm beträgt.

3. Zahnstange (5) nach Anspruch 2, **dadurch gekennzeichnet, dass** der Krümmungsradius des gekrümmten Abschnitts des Raums (15) 0,30 mm beträgt.

4. Zahnstange (5) nach Anspruch 1, **dadurch gekennzeichnet, dass** der Krümmungsradius des gekrümmten Abschnitts des Raums (15) dem Ein- bis Zehnfachen des Krümmungsradius der die Wände (13, 14) von zwei angrenzenden Zähnen (6) einer bekannten Zahnstange verbindenden Fläche (12) entspricht, wobei der Krümmungsradius der obigen Verbindungsfläche (12) 0,05 bis 0,10 mm beträgt.

5. Zahnstange nach Anspruch 4, **dadurch gekennzeichnet, dass** der Krümmungsradius des gekrümmten Abschnitts des Raums (15) dem Drei- bis Sechsfachen des Krümmungsradius der obigen Verbindungsfläche (12) entspricht.

## Revendications

1. Crémaillère (5) pour un dispositif tendeur hydraulique pour chaînes (1), ladite crémaillère (5) comportant une pluralité de dents (6) arrangées dans une direction linéaire le long de ladite crémaillère (5), et comprenant chacune une région de couronne de dent et une région de pied de dent,
- selon laquelle un espace (15) est prévu entre les dents adjacentes (6),
- selon laquelle une dent (6) desdites dents adjacentes (6) a une paroi linéaire inclinée (13) par rapport à la direction linéaire de ladite crémaillère (5) et commençant à partir de sa couronne de dent, suivie d'une paroi perpendiculaire par rapport à la direction linéaire de ladite crémaillère (5),
- selon laquelle l'autre dent (6) desdites dents adjacentes (6) a une paroi (14) parallèle à ladite paroi perpendiculaire de ladite une dent (6) et commençant à partir de sa couronne de dent,
- selon laquelle une partie incurvée, ayant un grand rayon de courbure, joint l'une à l'autre lesdites parois parallèles desdites dents adjacentes (6),
- selon laquelle ladite paroi linéaire inclinée (13) et ladite paroi perpendiculaire de ladite une dent, et ladite partie incurvée et ladite paroi perpendiculaire (14) de ladite autre dent (6) définissent ledit espace (15).

2. Crémaillère (5) selon la revendication 1, **caractérisée en ce que** le rayon de courbure de la partie incurvée de l'espace (15) est compris dans une fourchette entre 0,10 et 0,50 mm.

3. Crémaillère (5) selon la revendication 2, **caractérisée en ce que** le rayon de courbure de la partie incurvée de l'espace (15) est de 0,30 mm.

4. Crémaillère (5) selon la revendication 1, **caractérisée en ce que** le rayon de courbure de la partie incurvée de l'espace (15) est compris dans une fourchette entre 1 et 10 fois le rayon de courbure de la partie de jonction (12) des parois (13, 14) de deux dents adjacentes (6) d'une crémaillère connue, le rayon de courbure de la susdite partie de jonction (12) étant compris dans une fourchette entre 0,05 et 0,10 mm.

5. Crémaillère (5) selon la revendication 4, **caractérisée en ce que** le rayon de courbure de la partie incurvée de l'espace (15) est compris dans une fourchette entre 3 et 6 fois le rayon de courbure de la susdite partie de jonction (12).
